# EUROPEAN PATENT APPLICATION

(11) **EP 4 113 335 A1**
(43) Date of publication of application: **04.01.2023**
(21) Application number: 20922118.3
(22) Date of filing: 28.02.2020
(51) Int. Cl.: G06F 21/33, H04L 9/32

(54) **CONTROL METHOD, CONTROL PROGRAM, AND INFORMATION PROCESSING DEVICE**

(71) Applicant: FUJITSU LIMITED, Kawasaki-shi, Kanagawa 211-8588 (JP)
(72) Inventor: UNO, Kazuya, Kawasaki-shi, Kanagawa 211-8588 (JP); HASEBE, Takayuki, Kawasaki-shi, Kanagawa 211-8588 (JP); MATSUDA, Masahiro, Kawasaki-shi, Kanagawa 211-8588 (JP); MATSUMOTO, Tatsuro, Kawasaki-shi, Kanagawa 211-8588 (JP); TAKECHI, Ryuichi, Kawasaki-shi, Kanagawa 211-8588 (JP)
(74) Representative: Hoffmann Eitle
(86) International application number: PCT/JP2020/008381
(87) International publication number: WO 2021/171571

(57) **Abstract**

An information processing device (10) detects an authentication status of a network authentication module (12) mounted on the information processing device (10) or a connection status of a network controlled according to the authentication status. Then, the information processing device (10) controls execution of an electronic signature according to signature information stored in the network authentication module (12) on the basis of the detected authentication status or connection status.

## Description

### FIELD

The present invention relates to a control method, a control program, and an information processing device.

### BACKGROUND

As a technique for securely transmitting and receiving data using a network, for example, an electronic signature with a public key infrastructure (PKI) or the like is used, is applied to user authentication, message validity confirmation, or the like, and is used for e-mails, Web services, or the like.

For example, as the electronic signature with the PKI, an electronic signature using a smart card or the like has been known. Specifically, for the electronic signature with the PKI, a private key of the PKI and a signature function are mounted on the smart card, identity verification is performed using a password (PIN) or the like in order to use the signature function of the smart card. After completing the identity authentication, a device mounting the smart card signs data to be signed created by the device using the signature function of the smart card and transmits the data as a message with a signature to outside. Then, a receiver device of the message with the signature verifies whether or not a certificate is valid using a mechanism of a certificate revocation list (CRL) or online certificate status protocol (OCSP). Thereafter, in a case where the receiver device can verify that the certificate is valid, the receiver device verifies the signature using a public key of the certificate and verifies that the message is a valid message.

In recent years, a time stamp signature that is a technique for proving that electronic data has existed at a certain time and the electronic data is not tampered thereafter or the like is used. By using this time stamp signature, it is possible to compare information described in a time stamp with information obtained from original electronic data and reliably and easily confirm that the electronic data is not tampered from a time attached to the time stamp. Because it is important for the time stamp signature that the time is not tampered, the time stamp signature is generally executed on a device on which hardware having a safe clock that cannot be tampered is mounted or a server on a network.

Specifically, a private key of the PKI and a signature function are mounted on a time stamp server, and identity verification using the PIN or the like is requested to use the signature function of the time stamp server. The time stamp server adds time information included in the time stamp server to the data to be signed transmitted from a transmission source, executes a signature using the signature function of the time stamp server, and transmits the data to a destination as a message with a signature. The receiver device of the message with the signature verifies whether or not the certificate is valid using the mechanism such as the CRL. Thereafter, in a case where the receiver device can verify that the certificate is valid, the receiver device verifies the signature using a public key of the certificate and verifies that the message is a valid message.

### SUMMARY

### TECHNICAL PROBLEM

However, with the technique described above, since anyone other than a person himself/herself or an authorized device can generate a signature when the PIN is leaked, there is a risk that an unauthorized electronic signature is generated. Note that, because the signature can be generated even in a case where the private key used to generate the signature is invalidated, it is considered to operate an invalidation mechanism such as the CRL in order to verify a signature result. However, the operation is complicated, and is not realistic.

In one aspect, an object is to provide a control method, a control program, and an information processing device that can prevent generation of an unauthorized electronic signature.

### SOLUTION TO PROBLEM

In a first idea, in a control method, a computer executes processing for detecting an authentication status of a network authentication module mounted on the computer or a connection status of a network controlled according to the authentication status. The control method executes processing for controlling execution of an electronic signature according to signature information stored in the network authentication module on the basis of the detected authentication status or connection status.

### ADVANTAGEOUS EFFECTS OF INVENTION

According to one embodiment, it is possible to prevent generation of an unauthorized electronic signature.

### BRIEF DESCRIPTION OF DRAWINGS

FIG. 1 is a diagram for explaining an overall configuration example of a system according to a first embodiment.
FIGs. 2A and 2B illustrate a diagram for explaining execution of an electronic signature according to the first embodiment.
FIG. 3 is a diagram for explaining a function of the system according to the first embodiment.
FIG. 4 is a diagram for explaining a message with a signature according to the first embodiment.
FIG. 5 is a sequence diagram illustrating a flow of processing according to the first embodiment.
FIG. 6 is a diagram for explaining a function of a system according to a second embodiment.
FIG. 7 is a diagram for explaining a message with a signature according to the second embodiment.
FIG. 8 is a diagram for explaining a function of a system according to a third embodiment.
FIG. 9 is a diagram for explaining a message with a signature according to the third embodiment.
FIG. 10 is a sequence diagram illustrating a flow of processing according to the third embodiment.
FIG. 11 is a diagram for explaining another configuration of an information processing device.
FIG. 12 is a diagram for explaining a signature using a cloud system.
FIG. 13 is a diagram for explaining a hardware configuration example.

### DESCRIPTION OF EMBODIMENTS

Hereinafter, embodiments of a control method, a control program, an information processing device according to the present invention will be described in detail with reference to the drawings. Note that these embodiments do not limit the present invention. Furthermore, each of the embodiments may be appropriately combined within a range without inconsistency.

### [First Embodiment]

### [Overall Configuration Example]

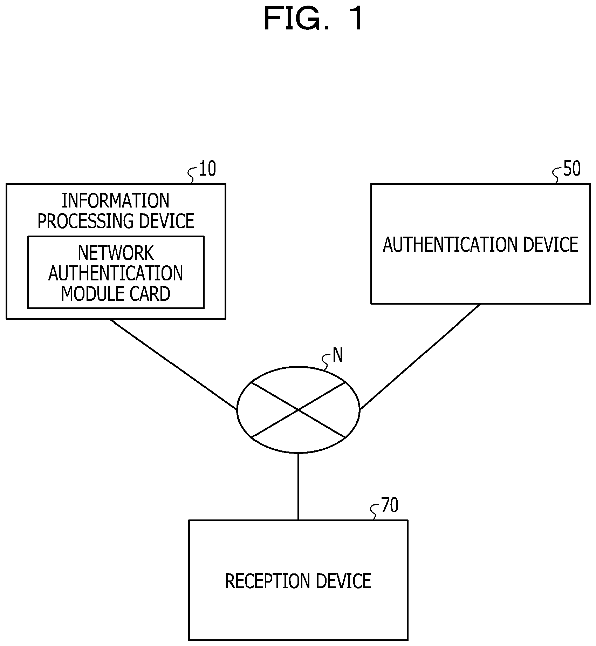

FIG. 1 is a diagram for explaining an overall configuration example of a system according to a first embodiment. As illustrated in FIG. 1, in this system, an information processing device 10, an authentication device 50, and a reception device 70 are communicably connected to each other via a network N. Note that, as the network N, various networks can be adopted regardless of whether the network is wired or wireless, and the network N is, for example, a communication carrier network provided by a communication carrier (communication carrier) or the like.

The information processing device 10 is a device that transmits a message to the reception device 70 using an electronic signature with the PKI and is, for example, a computer, a smartphone, a mobile phone, or the like that is used by a subscriber or the like who is permitted to use the network N. For example, the information processing device 10 is provided in an electric or gas meter, a security camera, or the like and periodically adds an electronic signature to a sensor value, image data, or the like and transmits the sensor value or the image data. This information processing device 10 stores a network authentication module card that stores information regarding the subscriber.

The network authentication module card stores a PKI private key used for an electronic signature, a common key that is distributed to the subscribers and is an example of the information regarding the subscriber, or the like. This network authentication module executes authentication processing using an authentication and key agreement (AKA) key generation protocol or the like with the authentication device 50 in order to be permitted to use the network N. Note that as the network authentication module card, for example, a subscriber identity module (SIM) card, a universal SIM (USIM) card, an integrated circuit (IC) card, or the like can be adopted.

The authentication device 50 is an example of a server device that manages the network N. This authentication device 50 executes AKA authentication with the network authentication module card of the information processing device 10, and permits the information processing device 10 to use the network N in a case of permitting authentication and determining as a normal user (subscriber).

The reception device 70 is an example of a computer device that receives a message to which an electronic signature with the PKI is added and is, for example, a device that is permitted to use the network N by the authentication device 50. For example, in a case where the reception device 70 receives data with a signature to which the electronic signature is added from the information processing device 10 and can verify that a certificate in the data with the signature is valid, the reception device 70 verifies that the message is a valid message using a public key of the certificate. Note that, as a method for verifying a valid message, a general electronic signature method can be adopted.

Here, regarding the electronic signature using the PKI generally used, because anyone other than a person himself/herself or an authorized device can create a signature when the PIN is leaked, there is a possibility that an unauthorized electronic signature is generated. Therefore, in the signature with the PKI, the signature function is validated through user authentication, and certificate revocation management using the CRL or the OCSP is requested assuming theft or loss.

On the other hand, devices such as mobile phones or smartphones that are assumed to be connected to a network perform network authentication at the time of use, and it is possible to perform real-time control such as immediate operation stop according to control by a network side in a case of theft or loss.

Therefore, in the first embodiment, an authentication function to validate a signature function instead of the user authentication is implemented to be applicable to Internet of Things (IoT) devices or the like that is not directly operated by a user. Furthermore, regarding the signature with the PKI, by configuring the device so that the signature function cannot be used if not being connected to the network like mobile phones and smartphones, real-time control from the network side is realized, and a function that does not need revocation management such as the CRL is realized.

Specifically, the information processing device 10 detects an authentication status of a network authentication module card or a connection status of the network controlled according to the authentication, and executes an electronic signature according to signature information stored in the network authentication module card on the basis of the detected authentication status or connection status.

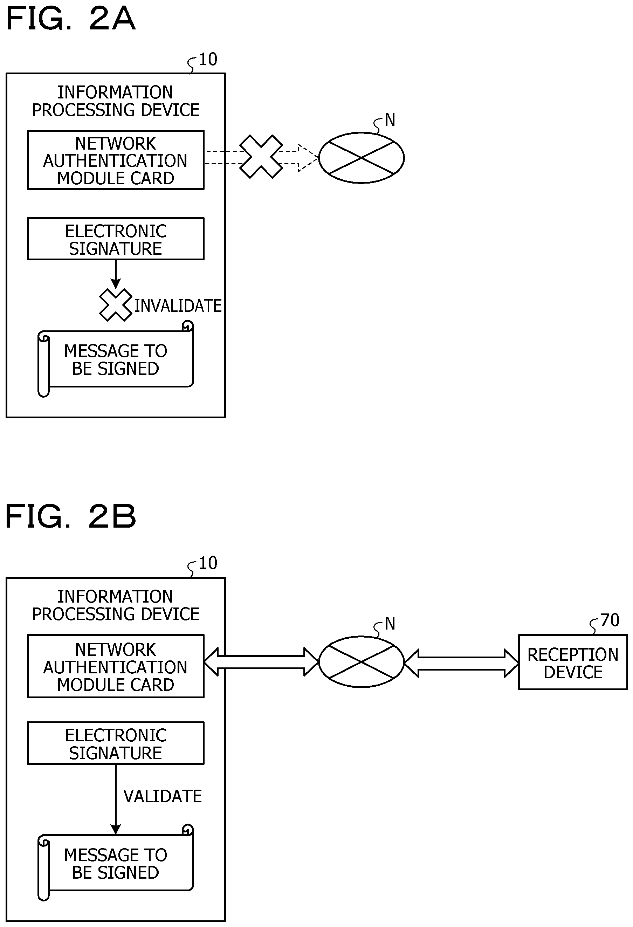

FIG. 2 (i.e., FIGs.2A and 2B) is a diagram for explaining execution of an electronic signature according to the first embodiment. As illustrated in FIG. 2A, the information processing device 10 invalidates a function of an electronic signature using a private key in the network authentication module card in a state where authentication by the authentication device 50 using a common key in the network authentication module card is not executed or rejected or in a state where a session to the network N is not established (disconnected state) although the authentication is permitted.

On the other hand, as illustrated in FIG. 2B, the information processing device 10 validates the function of the electronic signature using the private key in the network authentication module card in a state where the authentication by the authentication device 50 using the common key in the network authentication module card is permitted or in a state where the session is established in the network N (communicated state) after the authentication is permitted.

In this way, the information processing device 10 realizes a trust service by using the network authentication module card that is a hardware device having tamper resistance and is a secure device that is unlikely to leak confidential information as a trust anchor. As a result, it is possible for the information processing device 10 to prevent generation of an unauthorized electronic signature.

### [Functional Configuration]

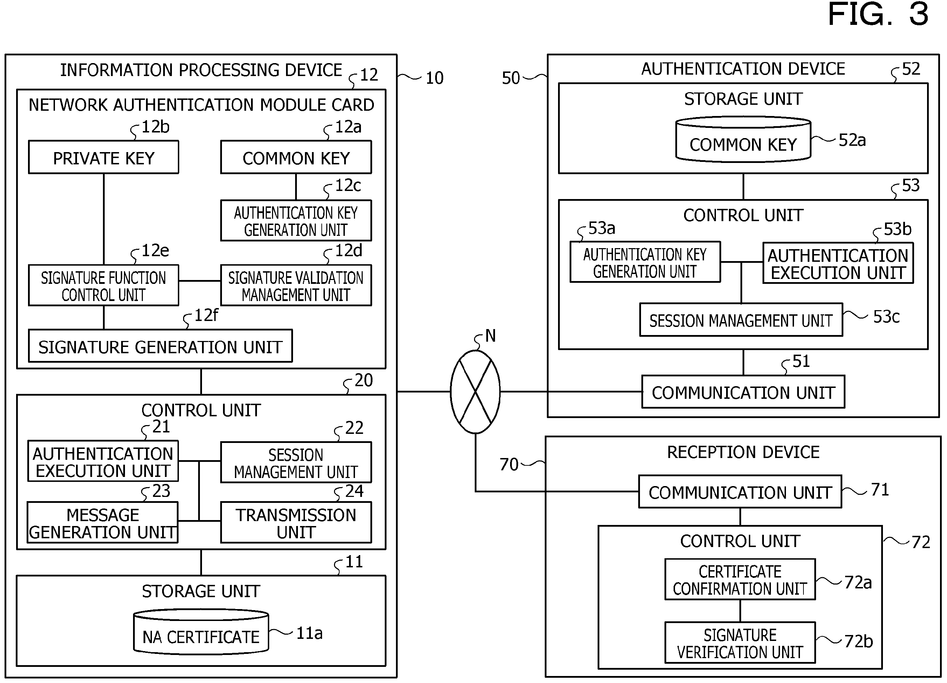

FIG. 3 is a diagram for explaining a function of a system according to the first embodiment. Here, each of the information processing device 10, the authentication device 50, and the reception device 70 will be described.

### (Configuration of Information Processing Device 10)

As illustrated in FIG. 3, the information processing device 10 includes a storage unit 11, a network authentication module card 12, and a control unit 20.

The storage unit 11 is a processing unit that stores various types of data, programs executed by the control unit 20, and the like, and is realized by, for example, a memory, a hard disk, or the like. This storage unit 11 stores an NA certificate 11a.

The NA certificate 11a is a certificate added to a message with a signature to which an electronic signature is executed. This NA certificate 11a is a certificate that is issued to the information processing device 10 for which a private key 12b of the signature is valid only when use of the network is permitted (authentication permission). Note that, in a policy part of the NA certificate 11a, conditions of use are described. Furthermore, the NA certificate 11a may be manually stored or may be downloaded from the authentication device 50 or the like that is an example of an issuance source at the time of first connection to the network N. Note that a certificate other than the NA certificate may be used.

The network authentication module card 12 is an example of a secure device that has tamper resistance and performs authentication to use the network N. This network authentication module card 12 includes a common key 12a, the private key 12b, an authentication key generation unit 12c, a signature validation management unit 12d, a signature function control unit 12e, and a signature generation unit 12f. Note that these functional units may be implemented by an electronic circuit in the network authentication module card 12 or the like or can be implemented as a process executed by a processor in the network authentication module card 12.

The common key 12a is a key used for the AKA authentication executed between the network authentication module card 12 and the authentication device 50 that manages the network N. This common key 12a is stored at the time when the network authentication module card 12 is manufactured, by a business operator that manages the communication carrier network (network N) or the like.

The private key 12b is a secret key corresponding to a user of the information processing device 10 and is used for an electronic signature. Specifically, the private key 12b is used to encrypt a hash value of a message to be signed.

The authentication key generation unit 12c is a processing unit that performs exchange of a key used for the AKA authentication or the like. For example, the authentication key generation unit 12c generates a key used for the AKA authentication. The key generated here is exchanged with the authentication device 50. In other words, the authentication key generation unit 12c performs key exchange along a processing sequence conforming to a general AKA key generation protocol or the like.

The signature validation management unit 12d is a processing unit that controls validity or invalidity of the electronic signature by the network authentication module card 12. Specifically, the signature validation management unit 12d controls execution of the electronic signature on the basis of an authentication status of the network authentication module card 12 or a connection status of the network N that is controlled according to the authentication. In other words, the signature validation management unit 12d validates the private key 12b only when a session is valid, in cooperation with a session management unit 22 to be described later.

For example, in a case where the use of the network N is permitted, the signature validation management unit 12d validates the private key 12b. Alternatively, the signature validation management unit 12d validates the private key 12b only when the use of the network N is permitted and a session is established in the network N. Note that the signature validation management unit 12d constantly determines whether or not the electronic signature is valid or invalid and notifies the signature function control unit 12e of the determination result.

The signature function control unit 12e is a processing unit that controls use of the private key 12b on the basis of the determination result of the signature validation management unit 12d. For example, in a case of a state where the signature validation management unit 12d determines that the electronic signature is valid at a timing when an electronic signature generation request is generated, the signature function control unit 12e reads the private key 12b and outputs the private key 12b to the signature generation unit 12f. On the other hand, in a case of a state where the signature validation management unit 12d determines that the electronic signature is invalid at the timing when the electronic signature generation request is generated, the signature function control unit 12e does not read the private key 12b and notifies the signature generation unit 12f of that the electronic signature is invalid.

The signature generation unit 12f is a processing unit that generates a message with a signature in which an electronic signature is added to a message to be signed using the electronic signature using the private key 12b. For example, the signature generation unit 12f executes the electronic signature only when the private key 12b is valid.

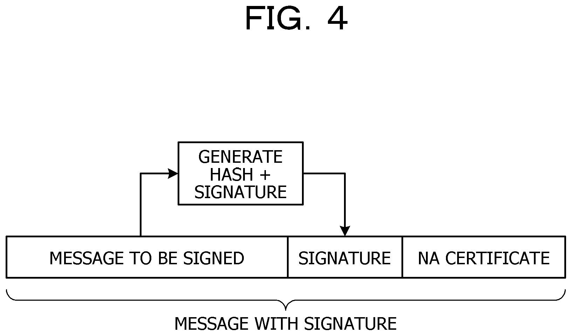

FIG. 4 is a diagram for explaining a message with a signature according to the first embodiment. As illustrated in FIG. 4, the signature generation unit 12f generates a hash value of the message to be signed using a hash function and generates a signature obtained by encrypting the hash value with the private key 12b. Then, the signature generation unit 12f generates a message with a signature in which the signature and the NA certificate 11a are added to the message to be signed.

The control unit 20 is a processing unit that controls the entire information processing device 10 and can be implemented, for example, by a processor or the like. The control unit 20 includes an authentication execution unit 21, the session management unit 22, a message generation unit 23, and a transmission unit 24. Note that the authentication execution unit 21, the session management unit 22, the message generation unit 23, and the transmission unit 24 can be implemented by an electronic circuit included in a processor or can be implemented as a process executed by the processor.

The authentication execution unit 21 is a processing unit that executes the AKA authentication on the network authentication module card 12 with the authentication device 50. For example, the authentication execution unit 21 exchanges the key generated by the authentication key generation unit 12c with the authentication device 50 and executes AKA authentication using the key. Then, the authentication execution unit 21 determines that the network N is permitted when the authentication is permitted, and notifies the session management unit 22 or the like of the permission of the use of the network N or the authentication permission. In other words, the authentication execution unit 21 executes authentication processing conforming to a general AKA key generation protocol.

The session management unit 22 is a processing unit that manages the authentication status of the network authentication module card 12 and a use status of the network N. For example, the session management unit 22 manages whether the authentication of the network authentication module card 12 is permitted or rejected according to the notification from the authentication execution unit 21.

Furthermore, when the authentication of the network authentication module card 12 is permitted, the session management unit 22 can establish a session to the network N. In other words, the session management unit 22 maintains a state where data can be transmitted to the network N. Then, the session management unit 22 notifies the signature validation management unit 12d of a management status as needed.

The message generation unit 23 is a processing unit that generates a message to be signed. For example, the message generation unit 23 generates the message to be signed according to a user's operation or a request by an application and outputs the message to the signature generation unit 12f.

The transmission unit 24 is a processing unit that transmits a message with a signature to a destination. For example, the transmission unit 24 transmits the message with the signature generated by the signature generation unit 12f to the destination reception device 70 using the session established by the session management unit 22.

### (Configuration of Authentication Device 50)

As illustrated in FIG. 3, the authentication device 50 is a device that includes a communication unit 51, a storage unit 52, and a control unit 53 and executes the AKA authentication with the network authentication module card 12 of the information processing device 10.

The communication unit 51 is a processing unit that controls communication with the information processing device 10 and is, for example, implemented by a communication interface or the like. For example, the communication unit 51 executes transmission and reception of various types of data such as key exchange at the time when the AKA authentication is executed.

The storage unit 52 is a processing unit that stores various types of data, programs executed by the control unit 53, and the like, and is implemented by, for example, a memory, a hard disk, or the like. This storage unit 52 stores a common key 52a. The common key 52a is a key used for the AKA authentication executed between the network authentication module card 12 and the authentication device 50.

The control unit 53 is a processing unit that controls the entire authentication device 50 and can be implemented by, for example, a processor or the like. This control unit 53 includes an authentication key generation unit 53a, an authentication execution unit 53b, and a session management unit 53c. Note that the authentication key generation unit 53a, the authentication execution unit 53b, and the session management unit 53c can be implemented by an electronic circuit included in a processor or can be implemented as a process executed by the processor.

The authentication key generation unit 53a is a processing unit that performs exchange of a key used for the AKA authentication or the like. For example, the authentication key generation unit 53a generates a key used for the AKA authentication and exchanges the key with the network authentication module card 12 of the information processing device 10. In other words, the authentication key generation unit 53a performs key exchange along a processing sequence conforming to a general AKA key generation protocol or the like.

The authentication execution unit 53b is a processing unit that executes the AKA authentication on the network authentication module card 12 with the information processing device 10. For example, the authentication execution unit 53b exchanges the key generated by the authentication key generation unit 53a with the network authentication module card 12 and executes AKA authentication using the key. In other words, the authentication execution unit 53b executes authentication processing conforming to a general AKA key generation protocol. Then, in a case of determining that the authentication is permitted according to the AKA authentication, the authentication execution unit 53b notifies the session management unit 53c of permission to use the network authentication module card 12.

The session management unit 53c is a processing unit that manages a session in the network N. For example, when the permission of the authentication to the network authentication module card 12 is notified by the authentication execution unit 53b, the session management unit 53c establishes a session with the network authentication module card 12 (information processing device 10). Furthermore, in a case where the authentication to the network authentication module card 12 is executed again and the authentication is rejected after the authentication has been permitted, the session management unit 53c disconnects the session with the network authentication module card 12 (information processing device 10).

### (Configuration of Reception Device 70)

As illustrated in FIG. 3, the reception device 70 is a device that includes a communication unit 71 and a control unit 72 and is a device to be a destination of the message with the signature transmitted from the information processing device 10. Note that the reception device 70 can include a storage unit that stores various types of data, programs executed by the control unit 53, or the like.

The communication unit 71 is a processing unit that controls communication with the information processing device 10 and is, for example, implemented by a communication interface or the like. For example, the communication unit 71 receives the message with the signature from the information processing device 10.

The control unit 72 is a processing unit that controls the entire reception device 70 and can be implemented by, for example, a processor or the like. This control unit 72 includes a certificate confirmation unit 72a and a signature verification unit 72b. Note that the certificate confirmation unit 72a and the signature verification unit 72b can be implemented by an electronic circuit included in a processor or can be implemented as a process executed by the processor.

The certificate confirmation unit 72a is a processing unit that confirms whether or not an NA certificate added to the message with the signature received from the information processing device 10 is valid. For example, the certificate confirmation unit 72a acquires the NA certificate from the message with the signature, refers to a policy of the NA certificate or the like, and specifies an expiration date or an issuer so as to determine whether or not the NA certificate is valid. In other words, what is verified here is not the private key 12b of each information processing device 10 on the signature side and is a certificate of an institution that has issued the NA certificate (corresponding to root certificate).

The signature verification unit 72b is a processing unit that verifies the signature using a public key of the NA certificate in a case where it is determined that the NA certificate of the message with the signature received from the information processing device 10 is valid. For example, when the certificate confirmation unit 72a determines that the NA certificate is valid, the signature verification unit 72b decrypts the signature of the message with the signature using the public key of the NA certificate and acquires a hash value. Then, the signature verification unit 72b calculates the hash value from the message to be signed of the message with the signature using a hash function. Thereafter, in a case where the both hash values match, the signature verification unit 72b determines that the message is a valid message to which a valid signature is executed. Note that, as a signature verification method, a general verification method can be adopted.

### [Processing Flow]

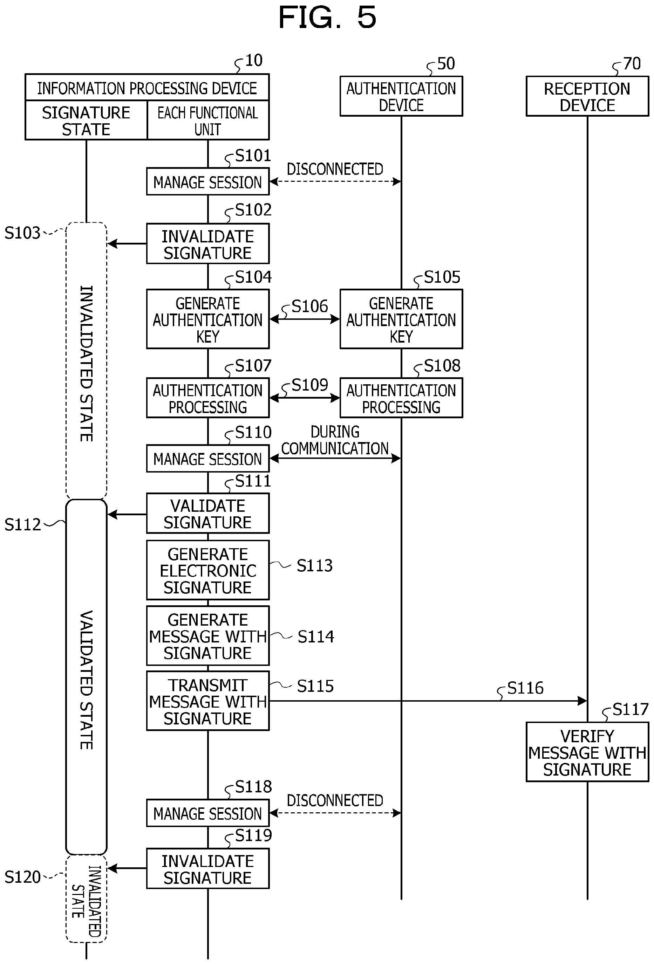

FIG. 5 is a sequence diagram illustrating a flow of processing according to the first embodiment. As illustrated in FIG. 5, when a session is managed before the AKA authentication is executed (S101), the network authentication module card 12 of the information processing device 10 invalidates the private key 12b because the network N is not available (S102) and invalidates the signature processing (S103).

Thereafter, an authentication key based on the AKA authentication is generated between the network authentication module card 12 of the information processing device 10 and the authentication device 50 (from S104 to S106), and the AKA authentication is executed between the network authentication module card 12 of the information processing device 10 and the authentication device 50 (from S107 to S109).

Then, the session management unit 22 of the information processing device 10 specifies that the authentication of the network authentication module card 12 is permitted and communication using the network N is executed (S110). Then, the signature validation management unit 12d of the network authentication module card 12 validates the private key 12b (S111) and validates the signature processing (S112).

Thereafter, when the message generation unit 23 of the information processing device 10 generates the message to be signed and an electronic signature generation request is generated, the signature generation unit 12f of the network authentication module card 12 generates the electronic signature using the valid private key 12b (S113) and generates the message with the signature to which the message to be signed is added (S114).

Then, the transmission unit 24 of the information processing device 10 transmits the message with the signature to the destination reception device 70 (S115 and S116). The reception device 70 verifies validity of a certificate or a signature or the like on the received message with the signature (S117).

Thereafter, the session management unit 22 of the information processing device 10 detects that the session of the network N is disconnected or the authentication is invalidated (S118). Then, because the network N is not available, the signature validation management unit 12d of the network authentication module card 12 invalidates the private key 12b (S119) and transitions the signature processing to an invalid state (S120).

### [Effects]

As described above, the information processing device 10 can validate the signature function of the PKI only when network authentication such as the AKA authentication using a physical medium such as the network authentication module card 12 is successfully executed. Then, the authentication by the network is executed in real time by the network-side authentication device 50, and it is possible to perform management such as stop of the network authentication module card 12 by performing management by the network side. As a result, by using the network authentication module card 12 that has higher authentication security than the PIN, it is possible to reduce a possibility of unauthorized use.

Furthermore, by validating the signature function of the PKI only when the network authentication module card 12 is valid and connection to the network N can be confirmed, the information processing device 10 can control the function of the PKI in real time. As a result, because the information processing device 10 can perform control for not validating the signature function of the PKI in real time when the private key of the PKI is invalidated, a revoking mechanism such as a CRL is not needed.

### [Second Embodiment]

By the way, the system described above can execute not only the signature described in the first embodiment but also a time stamp signature. Therefore, in a second embodiment, an example will be described in which the time stamp signature is executed using the system described in the first embodiment. Note that the time stamp signature is a technique for proving that electronic data has existed at a certain time and the electronic data has not been tampered thereafter.

### [Functional Configuration]

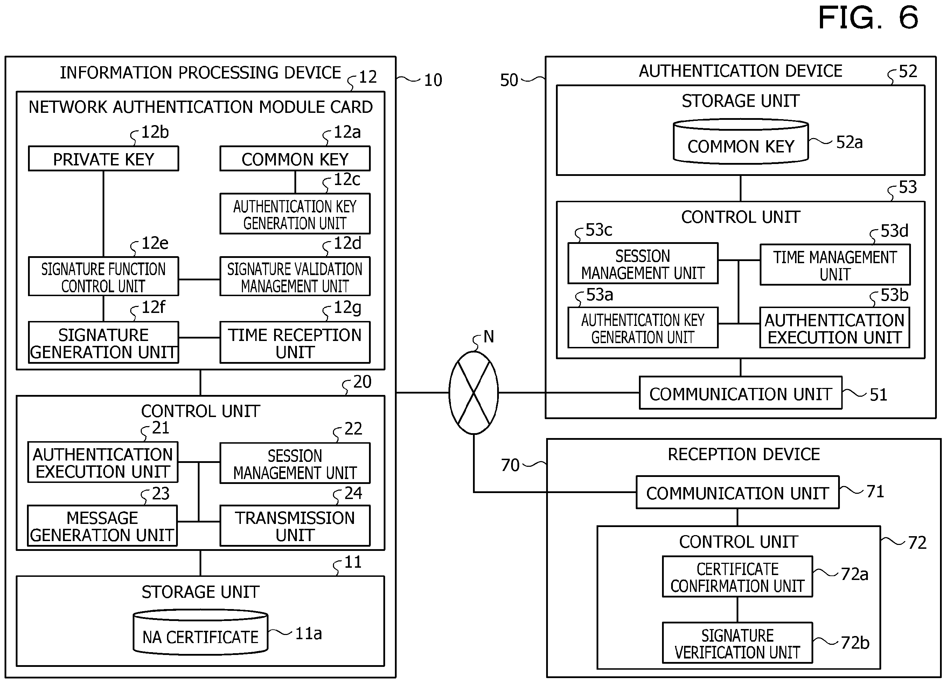

FIG. 6 is a diagram for explaining a function of a system according to the second embodiment. As illustrated in FIG. 6, the system according to the second embodiment also includes an information processing device 10, an authentication device 50, and a reception device 70 as in FIG. 1 in the first embodiment. Note that the processing unit or the like same as that of the first embodiment is denoted with a reference similar to that in FIG. 3, and here, points different from the first embodiment will be described.

The points different from the first embodiment include a point that the authentication device 50 includes a time management unit 53d and a point that a network authentication module card 12 of the information processing device 10 includes a time reception unit 12g.

The time management unit 53d of the authentication device 50 is a processing unit that manages accurate time information. For example, the time management unit 53d holds time information supplied from a network time protocol (NTP) server or the like. Then, after AKA authentication to the network authentication module card 12 is permitted, the time management unit 53d transmits the time information to the network authentication module card 12 via a session established in a network N.

The time reception unit 12g of the network authentication module card 12 is a processing unit that receives the accurate time information from the authentication device 50 and outputs the time information to a signature generation unit 12f. For example, the time reception unit 12g receives the accurate time information from the authentication device 50 via the session established after the AKA authentication of the network authentication module card 12 has been permitted.

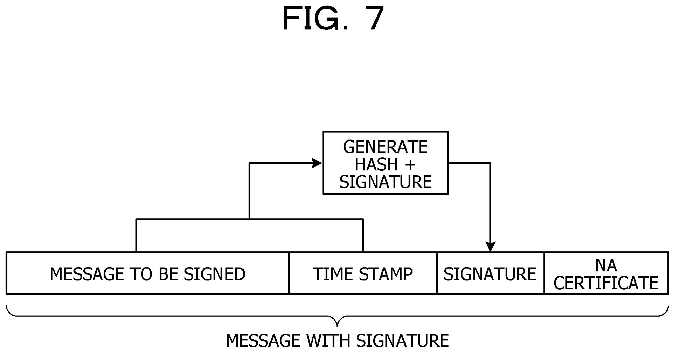

Here, the signature generation unit 12f generates a time stamp signature using a time stamp that is the received time information and generates a message with a signature in which the time stamp signature is added to a message to be signed. FIG. 7 is a diagram for explaining a message with a signature according to the second embodiment. As illustrated in FIG. 7, the signature generation unit 12f generates a hash value of information in which the message to be signed is combined with the time stamp using a hash function. Then, the signature generation unit 12f generates a signature obtained by encrypting the hash value with a private key 12b. Thereafter, the signature generation unit 12f generates a message with a signature in which a signature and an NA certificate 11a are added to the message to be signed and the time stamp.

Then, the reception device 70 confirms the certificate and verifies the signature, and in addition, verifies the time stamp with a method similar to the first embodiment. In other words, by comparing information described in the time stamp with information obtained from the message to be signed (original electronic data), the reception device 70 can reliably and easily confirm that the information is not tampered from the time attached to the time stamp.

### [Effects]

In a general time stamp signature, because double signatures are requested by executing a signature by the time stamp server on a result of a signature by a user terminal, double verification is requested for verification of a reception side. On the other hand, in the second embodiment, the authentication device 50 on the side of the network N holds accurate time information, transfers this time information to the terminal side, and executes a signature, so that the time stamp signature can be realized and the verification processing on the reception side can be reduced.

### [Third Embodiment]

By the way, the system described above can execute not only the PKI signature described in the first embodiment but also a signature using a ticket with an expiration date. Therefore, in a third embodiment, an example will be described in which the signature using the ticket is executed using the system described in the first embodiment.

### [Functional Configuration]

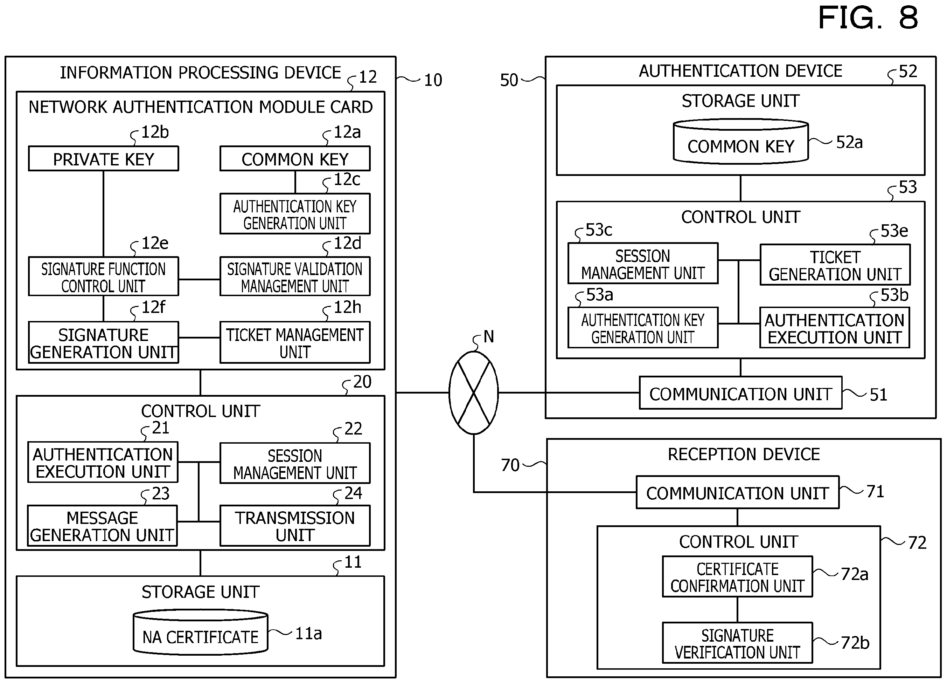

FIG. 8 is a diagram for explaining a function of a system according to the third embodiment. As illustrated in FIG. 8, the system according to the third embodiment includes an information processing device 10, an authentication device 50, and a reception device 70 as in FIG. 1 in the first embodiment. Note that the processing unit or the like same as that of the first embodiment is denoted with a reference similar to that in FIG. 3, and here, points different from the first embodiment will be described.

The points different from the first embodiment include a point that the authentication device 50 includes a ticket generation unit 53e and a point that a network authentication module card 12 of the information processing device 10 includes a ticket management unit 12h.

The ticket generation unit 53e of the authentication device 50 is a processing unit that generates a ticket with an expiration date indicating that a valid session is established only when AKA authentication is successfully executed. For example, after the AKA authentication to the network authentication module card 12 is permitted, the ticket generation unit 53e transmits the ticket via the session established in a network N to the network authentication module card 12. Note that, as the ticket, general tokens and permits can be adopted. Furthermore, the expiration date can be arbitrarily set such as several hours or several days.

The ticket management unit 12h of the network authentication module card 12 receives the ticket from the authentication device 50 and controls validity or invalidity of an electronic signature by the network authentication module card 12 on the basis of the expiration date in the ticket. For example, the ticket management unit 12h validates the private key 12b while the expiration date in the ticket is valid.

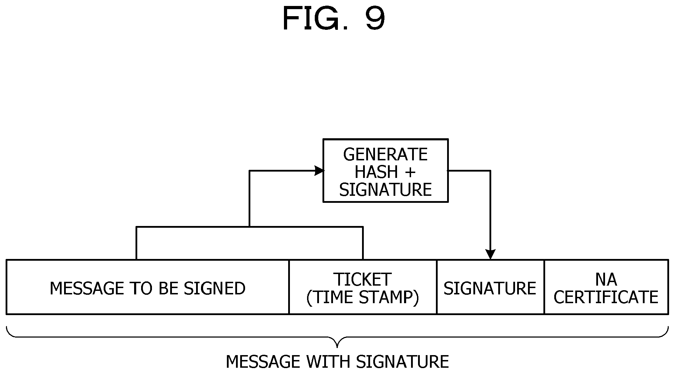

Here, the signature generation unit 12f generates an electronic signature using a time stamp of the received ticket and generates a message with a signature in which the electronic signature is added to a message to be signed. FIG. 9 is a diagram for explaining a message with a signature according to the third embodiment. As illustrated in FIG. 9, the signature generation unit 12f generates a hash value of information in which the message to be signed and the ticket are combined, using a hash function. Then, the signature generation unit 12f generates a signature obtained by encrypting the hash value with a private key 12b. Thereafter, the signature generation unit 12f generates a message with a signature in which a signature and an NA certificate 11a are added to the message to be signed and the ticket.

Note that the NA certificate 11a here is a certificate that is issued to the information processing device 10 to which the private key 12b of the signature is valid only while the expiration date of the ticket indicating that the valid session is established is valid only when the AKA authentication is successfully executed, and various conditions are described in a policy part of the certificate or the like. Then, the reception device 70 confirms the certificate, verifies the signature, or the like with a method similar to the first and second embodiments.

### [Processing Flow]

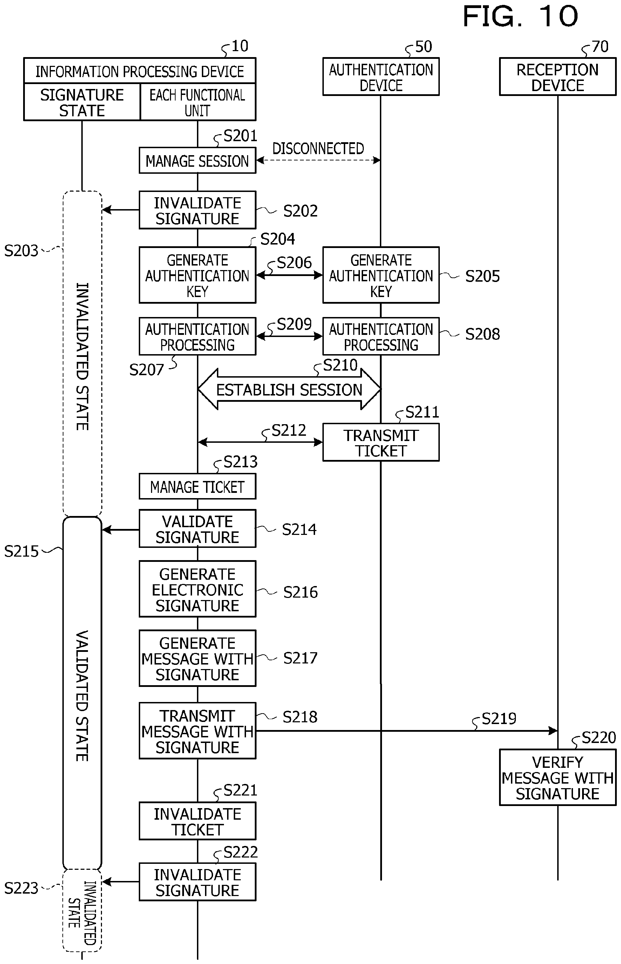

FIG. 10 is a sequence diagram illustrating a flow of processing according to the third embodiment. As illustrated in FIG. 10, when a session is managed before the AKA authentication is executed (S201), the network authentication module card 12 of the information processing device 10 invalidates the private key 12b because the network N is not available (S202) and invalidates the signature processing (S203).

Thereafter, an authentication key based on the AKA authentication is generated between the network authentication module card 12 of the information processing device 10 and the authentication device 50 (from S204 to S206), and the AKA authentication is executed between the network authentication module card 12 of the information processing device 10 and the authentication device 50 (from S207 to S209).

Then, a session of the information processing device 10 is established in the network N (S210), the ticket generation unit 53e of the authentication device 50 generates a ticket with an expiration date and transmits the ticket to the information processing device 10 (S211 and S212).

Thereafter, the network authentication module card 12 of the information processing device 10 manages the ticket (S213), validates the private key 12b because the ticket is within the expiration date (S214), and validates the signature processing (S215).

Thereafter, when the message generation unit 23 of the information processing device 10 generates the message to be signed and an electronic signature generation request is generated, the signature generation unit 12f of the network authentication module card 12 generates the electronic signature using the valid private key 12b (S216) and generates the message with the signature to which the message to be signed is added (S217).

Then, the transmission unit 24 transmits the message with the signature to the destination reception device 70 (S218 and S219). The reception device 70 verifies validity of a certificate or a signature or the like for the received message with the signature (S220).

Thereafter, even if the session of the network N is established, when detecting that the expiration date of the ticket is invalid (S221), the network authentication module card 12 of the information processing device 10 invalidates the private key 12b (S222), and transitions the signature processing to an invalid state (S223).

### [Effects]

In the system according to the third embodiment, validation or invalidation of the signature function by the ticket is controlled after the AKA authentication to the network authentication module card 12. Therefore, it is possible to validate the signature function even in a case where network connection is temporarily disconnected after the authentication permission of the information processing device 10, and it is possible to improve availability under an unstable network environment as compared with the first embodiment. Note that it is also possible to execute the time stamp signature including the time stamp in the ticket.

### [Fourth Embodiment]

By the way, the configuration of the information processing device 10 described in the first to the third embodiments is not limited to the described configuration, and arrangement of the processing units can be arbitrarily set. Therefore, in a fourth embodiment, an example of different arrangement of the processing units will be described. Note that, in each drawing used in the fourth embodiment, the processing unit for executing the same processing as the first to third embodiments or the like is denoted with the same reference as that in the first to the third embodiments.

### [Another Configuration of Information Processing Device 10]

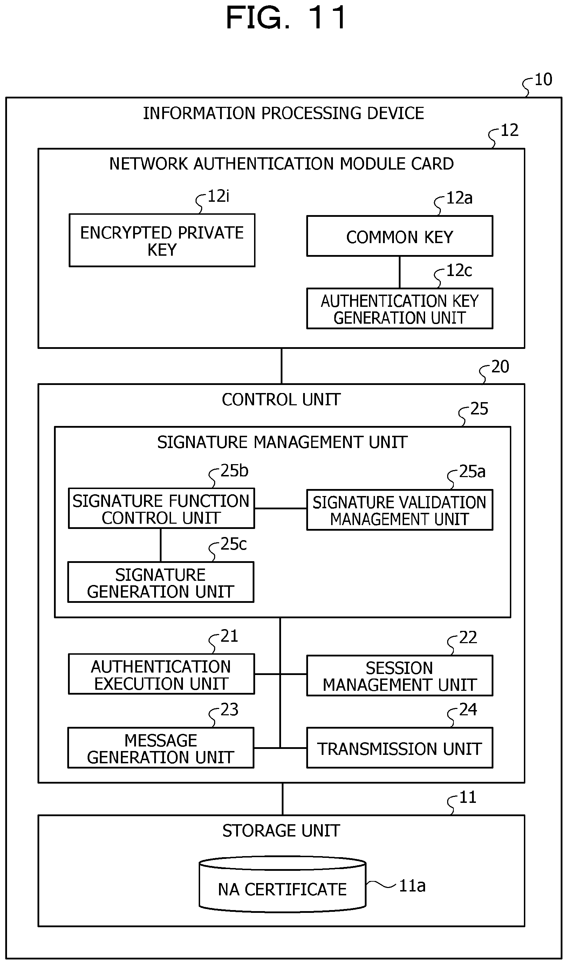

FIG. 11 is a diagram for explaining another configuration of the information processing device 10. As illustrated in FIG. 11, a network authentication module card 12 of the information processing device 10 includes a common key 12a, an authentication key generation unit 12c, and an encrypted private key 12i. Furthermore, a control unit 20 of the information processing device 10 includes an authentication execution unit 21, a session management unit 22, a message generation unit 23, a transmission unit 24, and a signature control unit 25. Furthermore, the signature control unit 25 includes a signature validation management unit 25a, a signature function control unit 25b, and a signature generation unit 25c.

In such a configuration, the signature validation management unit 25a controls validity or invalidity of an electronic signature by the network authentication module card 12. The signature function control unit 25b controls use of the private key 12i on the basis of a determination result by a signature validation management unit 12d. The signature generation unit 25c generates a message with a signature in which an electronic signature is added to a message to be signed by the electronic signature using the private key 12i.

For example, in a case where the signature validation management unit 12d permits AKA authentication and determines that the signature is valid, the signature function control unit 25b holds a decryption key, reads and decrypts the encrypted private key 12i, and then, outputs the decrypted key to the signature generation unit 25c. Note that the decryption key may be held in advance, or may be acquired from the authentication device 50 or the like using a secure communication method.

In this way, unlike the first to the third embodiments, the network authentication module card 12 can execute normal AKA authentication, and the control unit 20 such as a processor can control validity or invalidity of a signature function of a PKI.

### [Use of Cloud System]

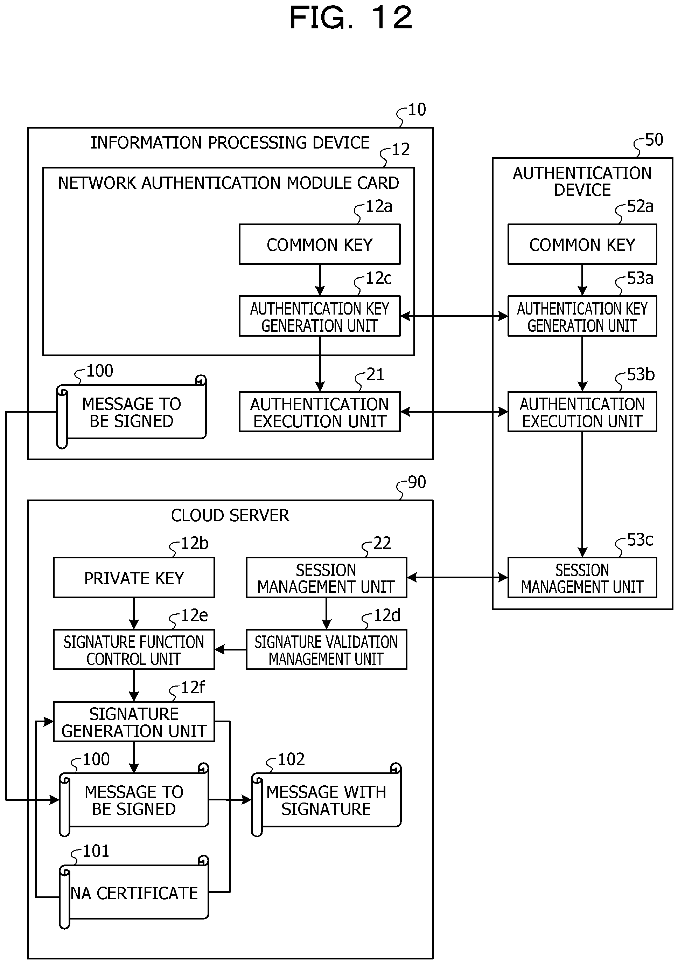

FIG. 12 is a diagram for explaining a signature using a cloud system. As illustrated in FIG. 12, by using a system that includes the information processing device 10, the authentication device 50, and a cloud server 90, the processing as in the first to the third embodiments can be executed.

Specifically, the information processing device 10 includes the network authentication module card 12 including the common key 12a and the authentication key generation unit 12c, and the authentication execution unit 21. That is, the information processing device 10 has only a function for executing AKA authentication.

The cloud server 90 includes a private key 12b, a signature validation management unit 12d, a signature function control unit 12e, a signature generation unit 12f, and a session management unit 22. That is, the cloud server 90 has a function for controlling a signature function according to an authentication status or the like and executing signature processing.

The authentication device 50 has functions (processing units) similar to those of the first to the third embodiments, executes AKA authentication with the information processing device 10, and notifies the cloud server 90 of an authentication status or session information after permitting the authentication.

In a case of such a configuration, after executing the AKA authentication with the authentication device 50 and being permitted, the information processing device 10 transmits a message to be signed 100 to the cloud server 90. In a case where it is determined that the signature function is valid according to session management with the authentication device 50, the cloud server 90 generates a message with a signature 102 from the message to be signed 100 and an NA certificate 101 using the private key 12b and transmits the message to a destination.

In this way, because the cloud server 90 can protect the private key of each information processing device and control the signature, the functions similar to those of the first to the third embodiments can be provided to an existing information processing device, and it is possible to prevent generation of an unauthorized electronic signature.

### [Fifth Embodiment]

While the embodiments of the present invention have been described so far, the present invention may be carried out in various different forms in addition to the above-described embodiments.

### [Position Information]

For example, the information processing device 10 can execute signature control by further using position information. For example, the information processing device 10 acquires position information when the AKA authentication is permitted from the authentication device 50 or the like with a method similar to a time stamp or a ticket. Then, the information processing device 10 validates a signature of a PKI when the information processing device 10 is positioned within a predetermined range from the acquired position information in an authentication permission state or during an established session. On the other hand, when the information processing device 10 is not positioned within the predetermined range from the acquired position information, the information processing device 10 invalidates the signature of the PKI even in the authentication permission state or during the established session.

Thus, even in a case where the information processing device 10 is stolen or is lost after the AKA authentication, it is possible to prevent the electronic signature from being illegally used. Note that the authentication device 50 can acquire the position information from a base station of a communication carrier or the like and transmit the position information to the information processing device 10. Note that the information processing device 10 can acquire the position information using the global positioning system) installed in the base station or the device, or the like.

### [Numerical Values, etc.]

A numerical value example, the number of devices, or the like used in the above embodiments are merely examples, and can be optionally changed. Furthermore, in addition to the AKA authentication, other authentication methods can be adopted. Furthermore, the flow of the processing described in each sequence diagram can be appropriately changed within a consistent range.

### [System]

Pieces of information including a processing procedure, a control procedure, a specific name, various types of data, and parameters described above or illustrated in the drawings may be optionally changed unless otherwise specified. Note that the session management unit 22 is an example of a detection unit, and the signature validation management unit 12d is an example of an execution control unit.

Furthermore, each component of each device illustrated in the drawings is functionally conceptual, and is not needed to be physically configured as illustrated in the drawings. In other words, specific forms of distribution and integration of individual devices are not limited to those illustrated in the drawings. That is, all or a part of the devices may be configured by being functionally or physically distributed or integrated in optional units depending on various loads, use status, or the like.

Moreover, all or an optional part of individual processing functions performed in each device may be implemented by a central processing unit (CPU) and a program analyzed and executed by the CPU or may be implemented as hardware by wired logic.

### [Hardware]

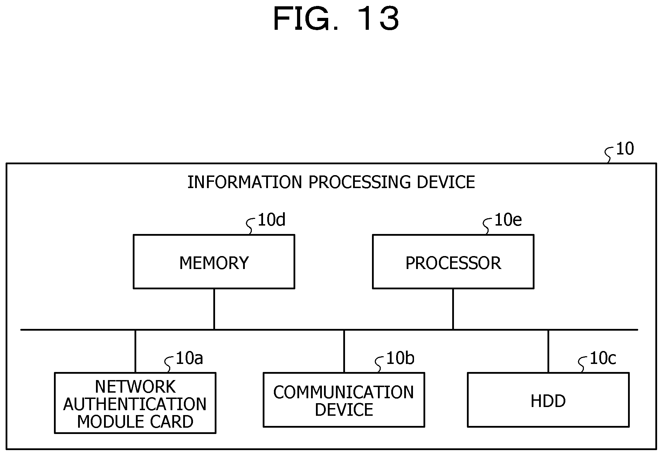

Next, a hardware configuration example of the information processing device 10 will be described. FIG. 13 is a diagram explaining a hardware configuration example. As illustrated in FIG. 13, the information processing device 10 includes a network authentication module card 10a, a communication device 10b, a hard disk drive (HDD) 10c, a memory 10d, and a processor 10e. Furthermore, each of the units illustrated in FIG. 13 is mutually connected by a bus or the like. Note that the authentication device 50 or the like includes hardware other than the network authentication module card 10a.

The network authentication module card 10a stores a private key of a PKI used for an electronic signature, a common key, distributed to a subscriber, that is an example of information regarding the subscriber, or the like and executes authentication processing using the AKA key generation protocol or the like with the authentication device 50.

The communication device 10b is a network interface card or the like and communicates with another server. The HDD 10c stores a program that operates the functions illustrated in FIG. 3 and DBs.

The processor 10e reads a program that executes processing similar to that of each processing unit illustrated in FIG. 3 from the HDD 10c or the like, and develops the read program in the memory 10d, thereby activating a process that executes each function described with reference to FIG. 3 or the like. For example, this process executes a function similar to the function of each processing unit included in the information processing device 10. Specifically, the processor 10e reads a program having functions similar to those of the authentication execution unit 21, the session management unit 22, the message generation unit 23, the transmission unit 24, or the like from the HDD 10c or the like. Then, the processor 10e executes a process that executes processing similar to the authentication execution unit 21, the session management unit 22, the message generation unit 23, the transmission unit 24, or the like. Note that, although FIG. 3 has been described here as an example, the same applies to FIGs. 6 and 11.

As described above, the information processing device 10 operates as an information processing device that executes an information processing method by reading and executing the program. In addition, the information processing device 10 may implement functions similar to those of the above embodiments by reading the above program from a recording medium by a medium reading device and executing the read program described above. Note that the program referred to in other embodiments is not limited to being executed by the information processing device 10. For example, the embodiment may be similarly applied to a case where another computer or server executes the program, or a case where such computer and server cooperatively execute the program.

### CITATION LIST

### PATENT DOCUMENT

Patent Document 1: Japanese Laid-open Patent Publication No. 2002-072876

### REFERENCE SIGNS LIST

10information processing device
11storage unit
11aNA certificate
12network authentication module card
12acommon key
12bprivate key
12cauthentication key generation unit
12dsignature validation management unit
12esignature function control unit
12fsignature generation unit
20control unit
21authentication execution unit
22session management unit
23message generation unit
24transmission unit
50authentication device
51communication unit
52storage unit
52acommon key
53control unit
53aauthentication key generation unit
53bauthentication execution unit
53csession management unit
70reception device
71communication unit
72control unit
72acertificate confirmation unit
72bsignature verification unit

## Claims

1. A control method for causing a computer to execute processing comprising:
detecting an authentication status of a network authentication module mounted on the computer or a connection status of a network controlled according to the authentication status; and
controlling execution of an electronic signature according to signature information stored in the network authentication module on the basis of the detected authentication status or connection status.

2. The control method according to claim 1, wherein
the detecting processing detects whether or not use of the network is permitted by an authentication device provided in the network on the basis of subscriber information regarding a subscriber permitted to use the network stored in the network authentication module as the authentication status or whether or not a session is established in the network as the connection status, and
the controlling processing validates the execution of the electronic signature while the use of the network is permitted or while the session is established in the network.

3. The control method according to claim 2, wherein the controlling processing generates a message with a signature in which the signature generated according to the electronic signature is added to a message to be signed and transmits the message to a destination.

4. The control method according to claim 3, wherein the controlling processing adds a certificate that indicates that the signature is signature information generated according to the electronic signature validated when the use of the network is permitted by the authentication device to the message with the signature and transmits the message to the destination.

5. The control method according to claim 3, wherein the controlling processing executes the electronic signature on the message to be signed and time information acquired from the network, adds the signature generated according to the electronic signature to the message with the signature, and transmits the message to a destination.

6. The control method according to claim 2, wherein the controlling processing validates the execution of the electronic signature during a valid period of a ticket issued by the authentication device after the use of the network is permitted by the authentication device.

7. The control method according to claim 2, wherein the controlling processing validates the execution of the electronic signature while being within a predetermined range from a position of the computer when the use of the network is permitted by the authentication device.

8. A control program comprising instructions which, when executed by a computer, cause the computer to execute processing comprising:
detecting an authentication status of a network authentication module mounted on the computer or a connection status of a network controlled according to the authentication status; and
controlling execution of an electronic signature according to signature information stored in the network authentication module on the basis of the detected authentication status or connection status.

9. An information processing apparatus comprising:
a detection unit that detects an authentication status of a network authentication module mounted on the computer or a connection status of a network controlled according to the authentication status; and
an execution control unit that controls execution of an electronic signature according to signature information stored in the network authentication module on the basis of the detected authentication status or connection status.
